# EUROPÄISCHE PATENTSCHRIFT

(11) **EP 0 811 534 B1**
(45) Veröffentlichungstag und Bekanntmachung des Hinweises auf die Patenterteilung: **02.01.2003**
(21) Anmeldenummer: 97108374.6
(22) Anmeldetag: 23.05.1997
(51) Int. Cl.: B60R 22/26, B60N 2/42

(54) **Rückhaltesystem für Fahrzeuginsassen**
Vehicle occupant restraint system
Système de retenue des occupants d'un véhicule

(30) Priorität: 07.06.1996 DE 29610078 U
(43) Veröffentlichungstag der Anmeldung: 10.12.1997
(73) Patentinhaber: TRW Occupant Restraint Systems GmbH & Co. KG, 73551 Alfdorf (DE)
(72) Erfinder: Böhmler, Klaus, 73525 Schwäbisch Gmünd (DE)
(74) Vertreter: Kitzhofer, Thomas, Dipl.-Ing.

(56) Entgegenhaltungen:
- FR-A- 2 201 659
- FR-A- 2 641 244
- GB-A- 1 228 657
- GB-A- 2 265 813
- US-A- 4 623 192
- "Seat Belt Activated Seat Ramp" RESEARCH DISCLOSURE, Bd. 319, Nr. 31934, November 1990, EMSWORTH, Seite 875 XP000160159

## Beschreibung

Die Erfindung betrifft ein Rückhaltesystem für Fahrzeuginsassen nach dem Oberbegriff des Anspruchs 1.

Bei einem Fahrzeugfrontalaufprall werden der Oberkörper und der Kopf eines Insassen nach vorn verlagert, bis die Vorwärtsbewegung von dem Rückhaltegurt begrenzt wird. Beim anschließenden Rückstoß prallen der Oberkörper und der Kopf gegen die Rückenlehne bzw. die Kopfstütze. Die Aufprallgeschwindigkeit wird bei einem bekannten Rückhaltesystem dadurch verringert, daß die Rückenlehne der Vorwärtsbewegung des Insassen durch einen pyrotechnischen Antrieb nachgeführt wird, wodurch sich der Abstand des Oberkörpers von der Rückenlehne und des Kopfes von der Kopfstütze verringert. Das Verletzungsrisiko im Nackenwirbelbereich kann dadurch reduziert werden. Ferner ist ein Rückhaltesystem bekannt, das den Neigungswinkel der Sitzfläche im Kollisionsfall vergrößert. Bei kleinen Fahrzeuginsassen besteht nämlich die Gefahr, daß sie bei einem Fahrzeugaufprall so tief in das Sitzteil des Fahrzeugsitzes aufgrund ihres tiefen Schwerpunktes in Verbindung mit einem nicht optimal angepaßten Rückhaltegurt tauchen, daß der Rückhaltegurt in den Bereich des Abdomen des Insassen rutscht, wo er schwere Verletzungen hervorrufen kann. Das Verletzungsrisiko wird noch erhöht, wenn die Impulseinleitung schräg von vorn erfolgt, da sich dann das Becken des Insassen zusätzlich dreht. Durch Verstellung des Neigungswinkels der Sitzfläche wird die Lage des Insassen stabilisiert, so daß dieser nicht mehr so tief in das Sitzteil eintauchen kann.

Gattungsgemäße Rückhaltesysteme sind aus dem Research Disclosure Nr. 31934 "Seat Belt Activated Seat Ramp", Bd. 319, November 1990, Emsworth, Seite 875 XP000160159 und aus der GB-A-1 228 657 bekannt. Das Research Disclosure beschreibt ein Rückhaltesystem, bei dem in der Sitzfläche eine schwenkbare Platte untergebracht ist, die mit dem Sicherheitsgurtsystem gekoppelt ist. Bei Zug auf das Gurtschloß schwenkt die Platte am vorderen Ende nach oben und dient damit dazu, den Insassen zurückzuhalten.

Die GB-A-1 228 657 beschreibt einen Sitz, der als Einheit bei einem Frontalaufprall nach vorne und anschließend nach hinten um eine Schwenkachse kippen kann. Da sich die Sitzfläche aber bei einem Unfall nach vorne neigt, kann von ihr keine zusätzliche Rückhaltewirkung für den Bereich der Oberschenkel ausgehen.

Die Erfindung schafft ein einfaches und wirksames Rückhaltesystem ohne eine teure Energiequelle zum Betätigen des Rückhaltesystems. Zudem sind keine aufwendigen Maßnahmen notwendig, die ein Fehlauslösen des Rückhaltesystems verhindern.

Bei einem Rückhaltesystem der eingangs genannten Art wird dies erfindungsgemäß dadurch erreicht, daß die Stelleinrichtung mit dem Neigungsverstellmechanismus für die Rückenlehne und/oder einem Neigungsverstellmechanismus für die Sitzfläche, deren Neigungswinkel von der Stelleinrichtung im Rückhaltefall vergröbert wird, verbunden ist. Die ansonsten für die Stelleinrichtung zusätzlich notwendigen Teile können entfallen. Die Energie zur Verstellung eines Bestandteils des Fahrzeugsitzes, zum Beispiel der Rückenlehne oder des Sitzteils, wird durch die träge Masse des Fahrzeuginsassen in einem Kollisionsfall bereitgestellt, indem die vom Insassen über den Rückhaltegurt in das Gurtschloß eingeleitete Kraft in der Stelleinrichtung in eine Verstellbewegung umgesetzt wird. Fehlauslösungen des Rückhaltesystems sind ausgeschlossen, da es mit der Bewegung des Fahrzeuginsässen direkt gekoppelt ist.

Gemäß eines ersten Prinzips des erfindungsgemäßen Rückhaltesystems ist die Rückenlehne des Fahrzeugsitzes mit der Stelleinrichtung verbunden, und bei einem Fahrzeugfrontalaufprall wird die Rückenlehne nach vorn geschwenkt und so der Vorwärtsbewegung des Insassen nachgeführt. Vorzugsweise ist dabei die Rückenlehne zudem so ausgebildet, daß sie beim anschließenden Rückprall des Insassen durch dessen Rückverlagerung nach hinten schwenkt, so daß dieser nicht auf einen relativ starren Gegenstand prallt.

Gemäß eines zweiten Prinzips des erfindungsgemäßen Rückhaltesystems ist vorgesehen, daß die Stelleinrichtung mit dem vom Fahrzeuginsassen betätigbaren Sitzneigungsverstellmechanismus gekoppelt ist oder im Rückhaltefall mit ihm gekoppelt werden kann.

Die Stelleinrichtung ist gemäß einer weiteren Ausführungsform so ausgebildet, daß der Schwenkbereich der Rückenlehne in Abhängigkeit von der Intensität des Aufpralls verändert werden kann.

Das Vorsehen eines Dämpfungselements, das mit der Rückenlehne verbunden ist, dämpft die Schwenkbewegung der Rückenlehne nach hinten. Die Bewegung des sich nach hinten verlagernden Insassen wird dadurch langsam verzögert.

Es sind verschiedene Möglichkeiten denkbar, den Neigungswinkel der Sitzfläche zu vergrößern. Die Stelleinrichtung kann beispielsweise so ausgebildet sein, daß sie den Neigungswinkel des gesamten Sitzteils des Fahrzeugsitzes vergrößert oder daß nur im vorderen Bereich des Sitzteils ein Element verschieb- oder verschwenkbar gelagert ist, das bei Betätigung der Stelleinrichtung den vorderen Bereich der Sitzfläche anhebt. Ferner kann eine im Sitzteil schwenkbar angeordnete Sitzwanne mit der Stelleinrichtung so verbunden sein, daß durch Schwenken der Sitzwanne der Neigungswinkel der an sie angrenzenden Sitzfläche vergrößert wird.

Ferner ist es vorteilhaft, wenn das Rückhaltesystem gurtschloßseitig einen Kraftbegrenzer aufweist, der mit der Stelleinrichtung gekoppelt ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Ausführungsform des erfindungsgemäßen Rückhaltesystems, bei dem die Rückenlehne eines Fahrzeugsitzes im Rückhaltefall verschwenkt wird,
Figur 2 eine Ansicht der gegenüberliegenden Seite des in Figur 1 gezeigten Fahrzeugsitzes,
Figur 3 eine vergrößerte Detailansicht des in Figur 1 gezeigten Rückhaltesystems,
Figuren 4a bis 4f sechs aufeinanderfolgende Phasen bei einem Frontalaufprall, die die Bewegungen eines Fahrzeuginsassen und die zugeordnete Verstellung der Rückenlehne zeigen,
Figur 5 eine Ausführungsform eines Rückhaltesystems mit einer verstellbaren Sitzfläche, wobei die Verstellung durch eine Stelleinrichtung in Form eines schwenkbar gelagerten Elements erfolgt,
Figur 6 eine Ausführungsform eines Rückhaltesystems mit verstellbarer Sitzfläche, wobei die Verstellung mittels einer schwenkbaren Sitzwanne erfolgt, und
Figur 7 eine Ausführungsform des erfindungsgemäßen Rückhaltesystems mit verstellbarer Sitzfläche, wobei die Verstellung durch Betätigung des Sitzneigungsverstellmechanismus erfolgt.

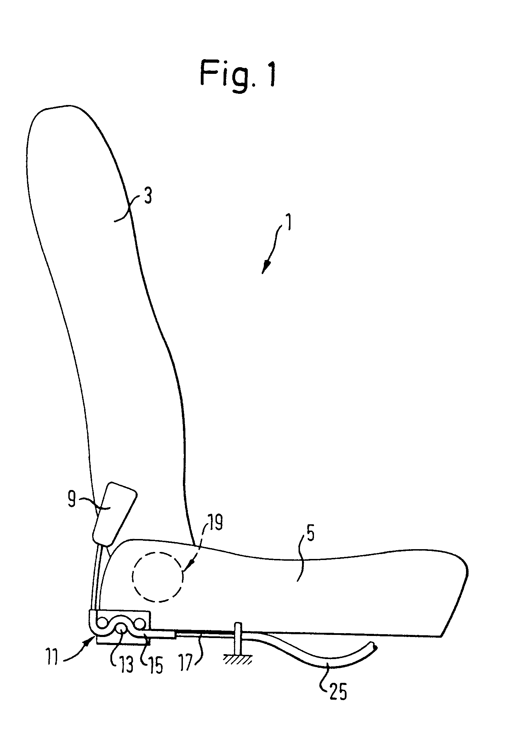

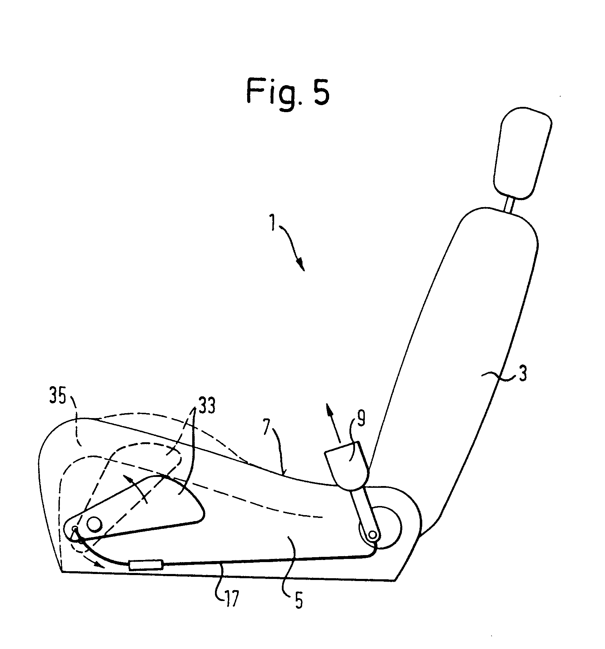

In den Zeichnungen sind zwei verschiedene Prinzipien von Rückhaltesystemen für einen Fahrzeuginsassen gezeigt, die jeweils einen Fahrzeugsitz 1 mit einer Rückenlehne 3 und einem Sitzteil 5 umfassen. Bei dem in den Figuren 1 bis 4 gezeigten ersten Prinzip des Rückhaltesystems kann die Rückenlehne 3 in einem Kollisionsfall verschwenkt werden, wogegen bei dem in den Figuren 5 bis 7 gezeigten zweiten Prinzip der Neigungswinkel der Sitzfläche des Sitzteils veränderbar ist.

Obwohl die in den Figuren 1 bis 4 und in den Figuren 5 bis 7 gezeigten Ausführungsformen des Rückhaltesystems getrennt gezeigt sind, besteht die Möglichkeit, beide Ausführungsformen in einen Fahrzeugsitz 1 einzubauen, der dann eine verstellbare Rückenlehne 3 und eine verstellbare Sitzfläche 7 aufweist.

In den Figuren sind einander entsprechende Teile mit gleichen Bezugszeichen versehen.

Gemäß Figur 1 weist der Fahrzeugsitz 1 ein an ihm verankertes Gurtschloß 9 auf, welches mit einem Kraftbegrenzer 11 verbunden ist. Der Kraftbegrenzer 11 besteht aus mehreren versetzt zueinander angeordneten Seilumlenkrollen 13 und einer plastisch verformbaren Ummantelung 15 eines am Gurtschloß 9 befestigten und zwischen den Seilumlenkrollen 13 geführten Zugseils 17.

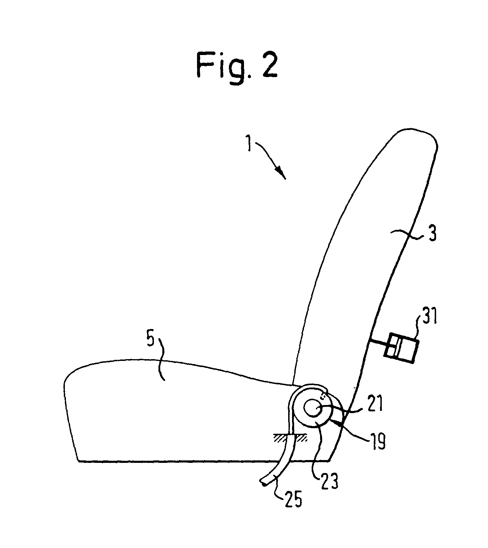

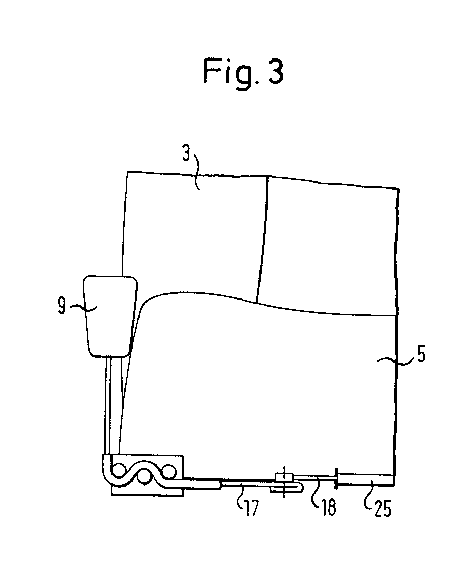

Das Zugseil 17 erstreckt sich vom Kraftbegrenzer 11 unterhalb des Sitzteils 5 nach vorn und wird durch ein an ihm befestigtes Seil 18 eines Bowdenzugs 25 (vgl. Figur 3) verlängert, welches wieder nach hinten umgelenkt wird, wo es an einem stilisiert dargestellten Neigungsverstellmechanismus 19 für die Rückenlehne 3, wie es in Figur 2 gezeigt ist, befestigt ist. Die Arretierung des Seils 18 am Neigungsverstellmechanismus 19 erfolgt über eine nicht gezeigte einrastbare Kupplung zwischen einer Welle 21 als Teil des Neigungsverstellmechanismus 19 und einer Scheibe 23, an der das Seil 18 befestigt ist. Die Kupplung ist dabei so ausgebildet, daß sie erst bei einer Aktivierung des Rückhaltesystems die Welle 21 und die Scheibe 23 kraftschlüssig miteinander koppelt. Eine nicht gezeigte weitere Kupplung verbindet die Welle 21 mit dem Antrieb in Form eines Handrads für den Neigungsverstellmechanismus 19. Diese Kupplung trennt bei Aktivierung des Rückhaltesystems den Antrieb vom Neigungsverstellmechanismus 19, um Störungen der durch die Aktivierung hervorgerufenen Bewegungsabläufe auszuschließen.

Das mit dem Gurtschloß 9 verbundene Zugseil 17 mit seiner Verlängerung bildet eine Stelleinrichtung zur Erzeugung einer Verstellbewegung für die Rückenlehne 3 im Rückhaltefall. Die Stelleinrichtung, die dafür sorgt, daß im Falle eines Frontalaufpralls die Rückenlehne 3 um ihre Schwenkachse, nämlich die Mittellinie der Welle 21, geschwenkt wird, wie im folgenden noch detailliert erläutert wird, erhält die zum Schwenken der Rückenlehne 3 erforderliche Energie durch die in das Gurtschloß 9 eingeleitete Zuglast aufgrund des sich im Rückhaltefall nach vorn verlagernden Fahrzeuginsassen.

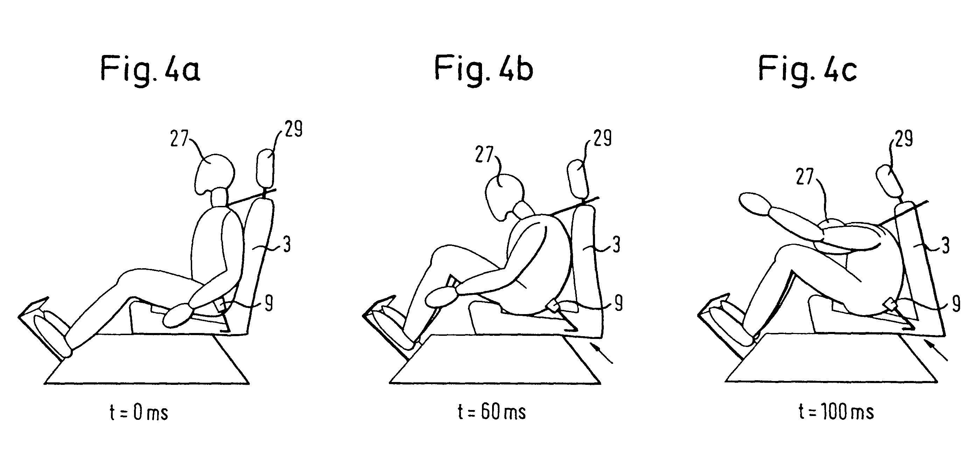

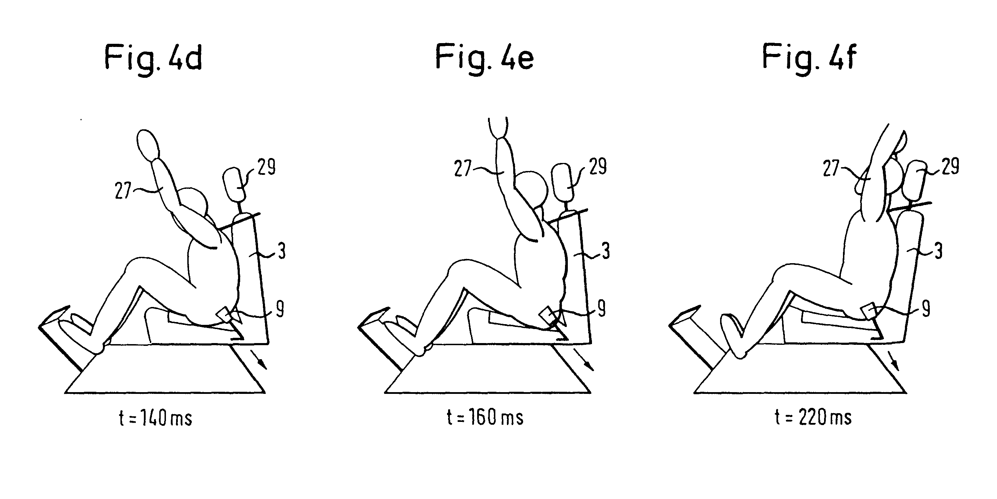

Die Funktionsweise des in den Figuren 1 bis 3 gezeigten Rückhaltesystems wird nun anhand der Figuren 4a bis 4f erläutert.

Bei nicht aktiviertem Rückhaltesystem kann über den Handradantrieb der Neigungsverstellmechanismus 19 der Rückenlehne 3 bewegt werden, so daß die Neigung der Rückenlehne 3 optimal an die Größe des Fahrzeuginsassen 27 angepaßt werden kann. Die Stelleinrichtung ist in diesem Zustand nicht mit dem Neigungsverstellmechanismus 19 gekoppelt.

Zum Zeitpunkt t = 0 ms, d.h. zu Beginn eines Fahrzeugsfrontalaufpralls, liegt der Oberkörper des Insassen 27 an der Rückenlehne 3 an und sein Kopf hat einen gewissen Abstand von einer an der Rückenlehne 3 angebrachten Kopfstütze 29.

Nach 60 ms haben sich insbesondere der Oberkörper und der Kopf des Insassen 27 so beträchtlich nach vorn bewegt, daß über den Rückhaltegurt eine Zugkraft in das Gurtschloß 9 und damit in das Zugseil 17 und das Seil 18 eingeleitet wird, die zu einer Verschiebung des Zugseils 17 und des Seils 18 in Pfeilrichtung gemäß Figur 4b führt. Aufgrund dieser Bewegung wird die Ummantelung 15 aus Aluminium zwischen den versetzt angeordneten Seilumlenkrollen 13 bewegt, was zu einer plastischen Verformung der Ummantelung 15 und damit zu einer Energieverzehrung führt. Durch die Verschiebung des Zugseils 17 und des Seils 18 rastet die zwischen der Scheibe 23 und der Welle 21 vorgesehene Kupplung ein und verbindet diese Teile miteinander, so daß die Rückenlehne 3 durch die Verschiebung des Gurtschlosses 9 nach vorn geschwenkt wird, wie in Figur 4b gezeigt. Die Rückenlehne 3 wird dadurch automatisch der Vorwärtsverlagerung des Fahrzeuginsassen nachgeführt. Die Nachführung der Rückenlehne 3 ist abhängig von der Intensität des Fahrzeugaufpralls, und der Verschwenkbereich der Rückenlehne 3 nimmt mit der Intensität des Fahrzeugaufpralls zu.

Eine weitere Vorverlagerung des Fahrzeuginsassen 27, bis etwa zum Zeitpunkt t = 100 ms nach Beginn eines Aufpralls, führt zu einer stetigen Nachführung der Rückenlehne 3. Im in Figur 4c gezeigten Zustand hat der Fahrzeuginsasse 27 etwa seine vorderste Position erreicht, bei der der Rückhaltegurt keine weitere Vorverlagerung mehr zuläßt.

Anschließend erfolgt eine Rückverlagerung des Fahrzeuginsassen 27. Da jedoch dessen Rücken trotz der Vorverlagerung weiterhin an der Rückenlehne 3 anliegt und der Abstand zwischen Kopf und der nachgeführten Kopfstütze 29 gegenüber einer nicht nachgeführten Rückenlehne 3 samt Kopfstütze 29 gering ist, hat der Kopf eine relativ niedrige Geschwindigkeit, wenn er auf die Kopfstütze 29 prallt. Bei einem leicht seitlichen Frontalaufprall besteht bisher zudem die Gefahr, daß beim Rückprall des Fahrzeuginsassen 27 dessen Kopf an der Kopfstütze 29 vorbeigleitet. Bei einer nachgeführten Rückenlehne 3 samt Kopfstütze 29 ist dieses Risiko deutlich geringer.

Der Neigungsverstellmechanismus 19 für die Rückenlehne 3 ist durch das Zugseil 17 und das Seil 18 nicht nur in der Schwenkrichtung nach vorn, sondern auch in der Schwenkrichtung nach hinten kraftschlüssig mit dem Gurtschloß 9 und dem Kraftbegrenzer 11 verbunden. Die Rückenlehne 3 wird in ihrer vordersten Stellung nicht fixiert, so daß sie beim Aufprall aufgrund der Rückverlagerung des Fahrzeuginsassen 27 nach hinten schwenkt (vgl. Fig. 4d bis 4f). Dies führt in Umkehrung des anhand der Figuren 4a bis 4c beschriebenen Bewegungsablaufs zu einer Verschiebung des Gurtschlosses 9 in Richtung des in den Figuren 4d bis 4f gezeigten Pfeiles. Dies wiederum führt zu einer erneuten Aktivierung des Kraftbegrerizers 11, der dann auch bei einer Verschwenkung der Rückenlehne 3 nach hinten Energie verzehrt und dadurch als Dämpfungselement wirkt. Ein zusätzliches Dämpfungselement 31, wie es in Figur 2 gezeigt ist, verstärkt die Dämpfung noch, so daß der Fahrzeuginsasse 27 bei seinem Rückprall nicht auf eine starre Rückenlehne 3 samt Kopfstütze 29 trifft, sondern von der sich nach hinten verlagernden Rückenlehne 3 samt Kopfstütze 29 relativ sanft abgebremst wird.

Die Vorverlagerung der Rückenlehne 3 bietet nicht nur für den Fahrzeugfrontinsassen einen erhöhten Schutz, sondern auch für Heckinsassen, die nicht mehr gegen die Rückenlehne 3 prallen können, so daß die Gefahr von Kopfverletzungen von Heckinsassen verringert wird.

Auch bei dem in den Figuren 5 bis 7 gezeigten Rückhaltesystem wird die Kraft zum Verstellen eines Bestandteils des Fahrzeugsitzes 1, nämlich der Sitzfläche 7, durch die Verlagerung des Gurtschlosses 9 aufgrund der in den Rückhaltegurt eingeleiteten Zuglast bewirkt. Das Zugseil 17 erstreckt sich vom Gurtschloß 9 aus nach vorn zu einem schwenkbar gelagerten Element 33 in Form eines zweiarmigen Hebels, der sich über nahezu die gesamte Sitzbreite erstreckt. Das Zugseil 17 und das Element 33 bilden eine Stelleinrichtung. Ein Arm des Hebels liegt in unbetätigtem Zustand des Rückhaltesystems an der Unterseite einer Polsterung 35 an. Am entgegengesetzten Arm ist das Zugseil 17 arretiert. Bei Zug auf das Gurtschloß 9 in Richtung des in Figur 1 gezeigten Pfeiles wird das Element 33 durch Verlagerung des Zugseils 17 im Gegenuhrzeigersinn geschwenkt, so daß ein Arm den vorderen Bereich der Sitzfläche 7 samt der Polsterung 35 nach oben drückt, wie in Figur 5 anhand von unterbrochenen Linien gezeigt ist.

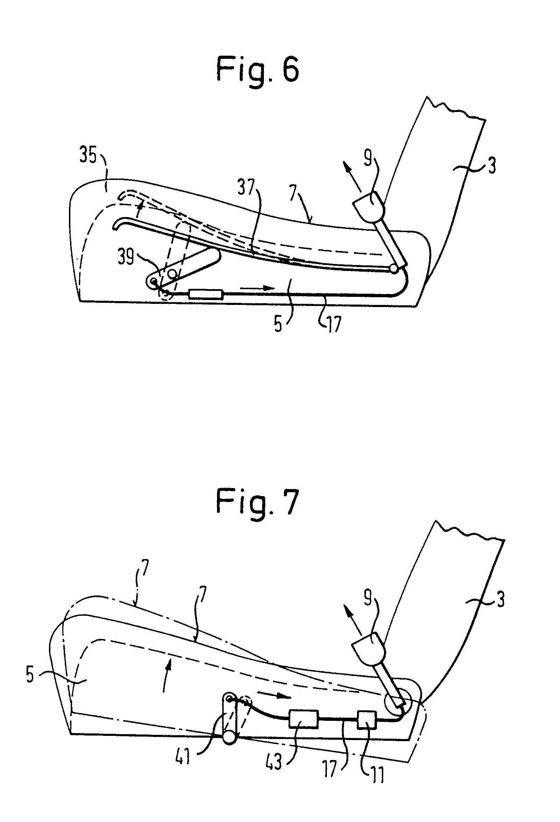

In der in Figur 6 gezeigten Ausführungsform ist eine im Inneren des Sitzteils 5 angeordnete Sitzwanne 37 als Teil der Stelleinrichtung schwenkbar im Inneren des Sitzteils 5 gelagert. Im vorderen Bereich der Sitzwanne 37 liegt an deren Unterseite ein Arm eines zweiarmigen Hebels 39 an, dessen gegenüberliegender Arm mit dem Zugseil 17 verbunden ist. Bei Verlagerung des Gurtschlosses 9 in Richtung des Pfeiles wird der Hebel 39 im Gegenuhrzeigersinn geschwenkt und in eine annähernd vertikale Stellung gebracht, so daß er die Sitzwanne 37 im Uhrzeigersinn schwenkt und der Neigungswinkel der Sitzfläche 7 zur Horizontalen vergrößert wird.

Die Ausführungsformen nach den Figuren 5 und 6 fallen allein nicht unter den Schutzumfang des Patentes. Die darin gezeigten Sitzflächenverstellungen können aber bei einem erfindungsgemäßen Rückhaltesystem verwendet werden, bei dem die Stelleinrichtung gemäß Anspruch 1 mit einem Neigungsverstellmechanismus für die Rückenlehne und/oder einem vom Fahrzeuginsassen betätigbaren Neigungsverstellmechanismus für die Stizfläche, deren Neigungsverstellmechanismus die Stelleinrichtung im Rückhaltefall vergrößert, verbunden ist.

In der in Figur 7 gezeigten Ausführungsform des Rückhaltesystems ist das Zugseil 17 mit einem Sitzneigungsverstellmechanismus 41 gekoppelt. Eine Kupplung 43, die zwischen Abschnitten des Zugseils 17 angeordnet ist, sorgt dafür, daß der Sitzneigungsverstellmechanismus 41 erst im Fall eines Fahrzeugaufpralls mit dem Gurschloß 9 kraftschlüssig verbunden wird. Ein mit dem Zugseil 17 gekoppelter Kraftbegrenzer 11 sorgt ferner für eine Dämpfung bei der Vorverlagerung des Fahrzeuginsassen im Rückhaltefall. Der Kraftbegrenzer 11 wird erst ab einer gewissen Intensität des Fahrzeugaufpralls ausgelöst. Das bedeutet bei der in Figur 7 gezeigten Ausführungsform, daß eine Verlagerung des Zugseils 17 ebenfalls erst ab einer vorbestimmten Intensität des Aufpralls erfolgt.

Bei den in den Figuren 5 bis 7 gezeigten Ausführungsformen des Rückhaltesystems wird der Neigungswinkel der Sitzfläche 7 durch eine rein mechanische Stelleinrichtung verändert, ohne daß es einer zusätzlichen Energiequelle bedarf. Anstatt eines Schwenkhebelmechanismus kann auch eine Linearführung vorgesehen sein, durch die zum Beispiel ein Keil im vorderen Bereich des Sitzteils 5 schräg nach oben verfahren wird, um die Sitzfläche 7 in diesem Bereich nach oben zu drücken.

Im folgenden wird die Funktionsweise des in den Figuren 5 bis 7 gezeigten Rückhaltesystems bei einem Frontalaufprall anhand von Figur 7 beschrieben. Bei einem Frontalaufprall bewegt sich der Fahrzeuginsasse relativ zum Fahrzeugsitz 1 nach vorn und ruft dadurch im Rückhaltegurt eine hohe Zuglast hervor, die in das Gurtschloß 9 eingeleitet wird, so daß dieses in Pfeilrichtung verlagert wird. Der Kraftbegrenzer 11 erlaubt eine Verlagerung des Gurtschlosses 9, wobei dabei die Ummantelung 15 des Zugseils 17 plastisch verformt wird, so daß die auf den Fahrzeuginsassen ausgeübte Rückhaltekraft des Rückhaltegurts begrenzt wird. Aufgrund der schnellen Verlagerung des Gurtschlosses 9 und des daran angeschlossenen Zugseils 17 rastet die Kupplung 43 ein, so daß eine kraftschlüssige Verbindung zwischen dem Gurtschloß 9 und dem Sitzneigungsverstellmechanismus 41 hergestellt ist. Das gesamte Sitzteil 5 schwenkt dadurch im Uhrzeigersinn, so daß der Neigungswinkel der Sitzfläche 7 vergrößert wird, wie anhand der strichpunktierten Linien in Figur 7 gezeigt ist. Das Ausmaß der Verstellung der Sitzfläche 7 hängt von der Intensität des Fahrzeugaufpralls ab, da sich bei höherer Intensität der Fahrzeuginsasse weiter nach vorn verlagert. Die steiler nach hinten geneigte Sitzfläche 7 stabilisiert die Lage des Fahrzeuginsassen bei einem Frontalaufprall, so daß das insbesondere bei kleinen Fahrzeuginsassen auftretende Risiko, daß durch zu starke Verlagerung des Beckens der Rückhaltegurt in den Bereich des Abdomen rutscht, verringert wird.

Die Funktionsabläufe bei den in den Figuren 5 und 6 gezeigten Ausführungsformen des Rückhaltesystems entsprechen im wesentlichen den anhand von Figur 7 beschriebenen Abläufen, wobei gemäß der Ausrührungsform nach Figur 5 durch Verlagerung des Gurschlosses 9 das Element 33 im Gegenuhrzeigersinn geschwenkt wird, so daß nur der vordere Bereich der Sitzfläche 7 angehoben wird, wogegen durch die Verschwenkung des Hebels 39 gemäß Figur 6 die gesamte Sitzwanne 37 und damit die gesamte Sitzfläche 7 verstellt wird.

Eine Kombination der in den Figuren 1 bis 4 und in den Figuren 5 bis 7 gezeigten Ausführungsformen des Rückhaltesystems besteht zum Beispiel darin, daß sich das Zugseil 17 nach dem Gurtschloß 9 aufzweigt. Ein Teil des Zugseils 17, also eine erste Stelleinrichtung, sorgt für die Verstellung der Sitzfläche 7 und ein zweiter Teil des Zugseils 17, also eine zweite Stelleinrichtung, für die Verstellung der Rückenlehne 3.

## Patentansprüche

1. Rückhaltesystem für Fahrzeuginsassen, mit einer Stelleinrichtung, mit einem an einem Fahrzeugsitz verankerten Gurtschloß und mit einem Rückhaltegurt, der über das Gurtschloß (9) mit dem Fahrzeugsitz (1) gekoppelt wird, wobei die im Rückhaltefall über das Gurtschloß (9) in den Fahrzeugsitz (1) eingeleitete Zuglast durch die Stelleinrichtung in eine Verstellbewegung wenigstens eines Bestandteils des Fahrzeugsitzes (1) umsetzbar ist, **dadurch gekennzeichnet, daß** die Stelleinrichtung mit einem Neigungsverstellmechanismus (19) für die Rückenlehne (3) und/oder einem vom Fahrzeuginsassen betätigbaren Neigungsverstellmechanismuns (41) für die Sitzfläche (7), deren Neigungswinkel die Stelleinrichtung im Rückhaltefall vergrößert, verbunden ist.

2. Rückhaltesystem nach Anspruch 1, **dadurch gekennzeichnet, daß** die Rückenlehne (3) des Fahrzeugsitzes (1) mit der Stelleinrichtung verbunden ist und durch sie bei einem Fahrzeugfrontalaufprall nach vom geschwenkt und so der Vorwärtsbewegung des Fahrzeuginsassen nachgeführt wird.

3. Rückhaltesystem nach Anspruch 2, **dadurch gekennzeichnet, daß** die Rückenlehne (3) so ausgebildet ist, daß sie beim anschließenden Rückprall des Insassen durch dessen Rückverlagerung nach hinten schwenkt.

4. Rückhaltesystem nach einem der Ansprüche 1 bis 3, **dadurch gekennzeichnet, daß** die Stelleinrichtung so ausgebildet ist, daß der Schwenkbereich der Rückenlehne (3) in Abhängigkeit von der Intensität des Aufpralls verändert werden kann.

5. Rückhaltesystem nach Anspruch 4, **dadurch gekennzeichnet, daß** die Rückenlehne (3) mit einem Dämpfungselement (31) verbunden ist, das die Schwenkbewegung der Rückenlehne (3) nach hinten dämpft.

6. Rückhaltesystem nach Anspruch 5, **dadurch gekennzeichnet, daß** die Stelleinrichtung so ausgebildet ist, daß sie erst bei Aktivierung des Rückhaltesystems mit dem Neigungsverstellmechanismus (19) für die Rückenlehne (3) gekoppelt wird.

7. Rückhaltesystem nach Anspruch 6, **dadurch gekennzeichnet, daß** die Stelleinrichtung so ausgebildet ist, daß bei Aktivierung des Rückhaltesystems ein Antrieb für den Neigungsverstellmechanismus (19) von diesem entkoppelt ist, so daß nur die Stelleinrichtung mit dem Neigungsverstellmechanismus (19) gekoppelt ist.

8. Rückhaltesystem nach einem der vorstehenden Ansprüche, **dadurch gekennzeichnet, daß** die Stelleinrichtung im Rückhaltefall den Neigungswinkel der Sitzfläche (7) vergrößert.

9. Rückhaltesystem nach Anspruch 8, **dadurch gekennzeichnet, daß** die Stelleinrichtung mit dem Neigungsverstellmechanismus (41) für die Sitzfläche (7) im Rückhaltefall gekoppelt wird.

10. Rückhaltesystem nach Anspruch 8 oder 9, **dadurch gekennzeichnet, daß** die Stelleinrichtung so ausgebildet ist, daß sie den Neigungswinkel des gesamten Sitzteils (5) des Fahrzeugsitzes (1) vergrößert.

11. Rückhaltesystem nach Anspruch 8 oder 9, **dadurch gekennzeichnet, daß** die Stelleinrichtung ein im vorderen Bereich des Sitzteils (5) verschieb- oder verschwenkbar gelagertes Element (33) umfaßt, das bei Betätigung der Stelleinrichtung den vorderen Bereich der Sitzfläche anhebt.

12. Rückhaltesystem nach Anspruch 8 oder 9, **dadurch gekennzeichnet, daß** die Stelleinrichtung eine im Sitzteil (5) verschwenkbar angeordnete Sitzwanne (37) umfaßt und daß durch Schwenken der Sitzwanne (37) der Neigungswinkel der an sie angrenzenden Sitzfläche (7) vergrößert wird.

13. Rückhaltesystem nach Anspruch 12, **dadurch gekennzeichnet, daß** die Stelleinrichtung einen zweiarmigen Hebel (39) umfaßt, wobei ein Arm an der Sitzwanne (37) angreift und der andere Arm mit einem Zugseil (17) verbunden ist.

14. Rückhaltesystem nach einem der Ansprüche 8 bis 13, **dadurch gekennzeichnet, daß** der Winkel, um den die Stelleinrichtung die Neigung der Sitzfläche (7) ändert, von der Intensität des Fahrzeugaufpralls abhängt.

15. Rückhaltesystem nach einem der Ansprüche 8 bis 14, **dadurch gekennzeichnet, daß** für die Verstellung des Neigungswinkels der Sitzfläche (7) eine erste Stelleinrichtung und für die Verstellung des Neigungswinkels der Rückenlehne (3) eine zweite Stelleinrichtung vorgesehen ist.

16. Rückhaltesystem nach einem der vorstehenden Ansprüche, **dadurch gekennzeichnet, daß** gurtschloßseitig ein Kraftbegrenzer (11) vorgesehen ist, der mit der Stelleinrichtung gekoppelt ist.

17. Rückhaltesystem nach einem der vorstehenden Ansprüche, **dadurch gekennzeichnet, daß** das Rückhaltesystem so ausgebildet ist, daß es erst bei einem Fahrzeugaufprall mit einer vorbestimmten Intensität ausgelöst wird.

## Claims

1. A restraint system for vehicle occupants, comprising a setting means, a belt buckle anchored to a vehicle seat, and a restraining belt which is coupled with the vehicle seat (1) by means of the belt buckle (9), the tension load transferred to the vehicle seat (1) via the belt buckle (9) in a restraint situation being able to be converted by the setting means into a displacing movement of at least one component of the vehicle seat (1), **characterized in that** the setting means is connected with a slant adjustment mechanism (19) for the back rest (3) and/or with a slant adjustment mechanism (41), operable by the vehicle occupant, for the seat area (7), the angle of slant of which is increased by the setting means in a restraint situation.

2. The restraint system as claimed in claim 1, **characterized in that** the back rest (3) of the vehicle seat (1) is connected with the setting means by which, in the case of a head-on impact of the vehicle, the back rest (3) is pivoted forward and is so caused to follow the forward movement of the vehicle occupant.

3. The restraint system as claimed in claim 2, **characterized in that** the back rest (3) is so designed that it is pivoted to the rear owing to the backward displacement of the occupant in the subsequent rebound of the occupant.

4. The restraint system as claimed in any of claims 1 to 3, **characterized in that** the setting means is so designed that the range of pivoting of the back rest (3) may be changed depending on the intensity of the impact.

5. The restraint system as claimed in claim 4, **characterized in that** the back rest (3) is connected with a damping element (31) for damping the pivoting movement of the back rest (3) to the rear.

6. The restraint system as claimed in claim 5, **characterized in that** the setting means is so designed that only upon actuation of the restraint system is it coupled with the slant adjustment mechanism (19) for the back rest (3).

7. The restraint system as claimed in claim 6, **characterized in that** the setting means is so designed that a drive for the slant adjustment mechanism (19) is uncoupled from same upon actuation of the restraint system so that only the setting means is coupled with the slant adjustment mechanism (19).

8. The restraint system as claimed in any of the preceding claims, **characterized in that** the setting means increases the angle of slant of the seat area (7) in a restraint situation.

9. The restraint system as claimed in claim 8, **characterized in that** the setting means is coupled with the slant adjustment mechanism (41) for the seat area (7) in a restraint situation.

10. The restraint system as claimed in claim 8 or 9, **characterized in that** the setting means is so designed that it increases the angle of slant of the entire cushion (5) of the vehicle seat (1).

11. The restraint system as claimed in claim 8 or 9, **characterized in that** the setting means comprises an element (33) that is slidingly or pivotally mounted in the front part of the cushion (5) arid that lifts the front part of the seat area on operation of the setting means.

12. The restraint system as claimed in claim 8 or 9, **characterized in that** the setting means comprises a seat shell (37) arranged pivotally in the cushion (5) and **in that** pivoting of the seat shell (37) leads to an increase in the angle of slant of the seat area (7) adjoining the seat shell.

13. The restraint system as claimed in claim 12, **characterized in that** the setting means includes a two-armed lever (39), one arm thereof engaging the seat shell (37) and the other arm thereof being connected with a traction cable (17).

14. The restraint system as claimed in any of claims 8 to 13, **characterized in that** the angle of change in the slant of the seat area (7) as caused by the setting means is dependent on the intensity of the vehicle impact.

15. The restraint system as claimed in any of claims 8 to 14, **characterized in that** a first setting means is provided for the adjustment of the angle of slant of the seat area (7) and a second setting means is provided for the adjustment of the angle of slant of the back rest (3).

16. The restraint system as claimed in any of the preceding claims, **characterized in that** provided on the belt buckle side is a force limiter (11) which is coupled with the setting means.

17. The restraint system as claimed in any of the preceding claims, **characterized in that** the restraint system is so designed that it is activated only upon a vehicle impact having a predetermined intensity.

## Revendications

1. Système de retenue de passagers, comportant un dispositif de commande, une serrure de ceinture ancrée sur un siège de véhicule et une ceinture de retenue qui est couplée au siège de véhicule (1) par l'intermédiaire de la serrure de ceinture (9), la charge de traction introduite dans le siège de véhicule (1) par l'intermédiaire de la serrure de ceinture en cas de retenue étant convertible par le dispositif de réglage en un mouvement de réglage d'au moins un élément du siège de véhicule (1), **caractérisé en ce que** le dispositif de commande est relié à un mécanisme de réglage d'inclinaison (19) pour le dossier (3) et/ou à un mécanisme de réglage d'inclinaison (41) pour la surface de siège (7), dont l'angle d'inclinaison est agrandi par le dispositif de commande en cas de retenue.

2. Système de retenue selon la revendication 1, **caractérisé en ce que** le dossier (3) du siège de véhicule (1) est relié au dispositif de commande et est pivoté par celui-ci vers l'avant lors d'une collision frontale de véhicule de sorte qu'il suit le mouvement vers l'avant du passager du véhicule.

3. Système de retenue selon la revendication 2, **caractérisé en ce que** le dossier (3) est réalisé de telle sorte que lors du contrecoup consécutif du passager, il pivote vers l'arrière en raison du déplacement du passager vers l'arrière.

4. Système de retenue selon l'une des revendications 1 à 3, **caractérisé en ce que** le dispositif de commande est réalisé de telle sorte que la plage de pivotement du dossier (3) peut être modifiée en fonction de l'intensité de la collision.

5. Système de retenue selon la revendication 4, **caractérisé en ce que** le dossier (3) est relié à un élément amortisseur (31) qui amortit le mouvement de pivotement du dossier (3) vers l'arrière.

6. Système de retenue selon la revendication 5, **caractérisé en ce que** le dispositif de commande est réalisé de telle sorte qu'il n'est couplé au mécanisme de réglage d'inclinaison (19) pour le dossier (3) que lors de l'activation du système de retenue.

7. Système de retenue selon la revendication 6, **caractérisé en ce que** le dispositif de commande est réalisé de telle sorte que lors de l'activation du système de retenue, un entraînement pour le mécanisme de réglage d'inclinaison (19) est découplé de celui-ci, de sorte que seul le dispositif de commande est couplé au mécanisme de réglage d'inclinaison (19).

8. Système de retenue selon l'une des revendications précédentes, **caractérisé en ce qu'**en cas de retenue, le dispositif de commande agrandit l'angle d'inclinaison de la surface de siège (7).

9. Système de retenue selon la revendication 8, **caractérisé en ce qu'**en cas de retenue, le dispositif de commande est couplé au mécanisme de réglage d'inclinaison (41) pour la surface de siège (7).

10. Système de retenue selon la revendication 8 ou 9, **caractérisé en ce que** le dispositif de commande est réalisé de telle sorte qu'il agrandit l'angle d'inclinaison de toute la partie d'assise (5) du siège de véhicule (1).

11. Système de retenue selon la revendication 8 ou 9, **caractérisé en ce que** le dispositif de commande comprend un élément (33) monté en translation ou à pivotement dans la région antérieure de la partie d'assise (5), qui soulève la région antérieure de la surface de siège (7) lors de l'actionnement du dispositif de réglage.

12. Système de retenue selon la revendication 8 ou 9, **caractérisé en ce que** le dispositif de commande comprend une cuve de siège (37) agencée à pivotement dans la partie d'assise (5) et **en ce qu'**en pivotant la cuve de siège (37), on agrandit l'angle d'inclinaison de la surface de siège (7) adjacente à celle-ci.

13. Système de retenue selon la revendication 12, **caractérisé en ce que** le dispositif de commande comprend un levier (39) à deux bras, un bras attaquant la cuve de siège (37) et l'autre bras étant relié à un câble de traction (17).

14. Système de retenue selon l'une des revendications 8 à 13, **caractérisé en ce que** l'angle, de la valeur duquel le dispositif de commande modifie l'inclinaison de la surface de siège (7), dépend de l'intensité de la collision du véhicule.

15. Système de retenue selon l'une revendications 8 à 14, **caractérisé en ce qu'**il est prévu un premier dispositif de commande pour le réglage de l'angle d'inclinaison de la surface de siège (7) et un deuxième dispositif de commande pour le réglage de l'angle d'inclinaison du dossier (3).

16. Système de retenue selon l'une des revendications précédentes, **caractérisé en ce que** du côté serrure de ceinture, il est prévu un limiteur de forces (11) qui est couplé au dispositif de commande.

17. Système de retenue selon l'une des revendications précédentes, **caractérisé en ce que** le système de retenue est réalisé de telle sorte qu'il n'est déclenché que lors d'une collision de véhicule avec une intensité prédéterminée.
